# EUROPÄISCHE PATENTSCHRIFT

(11) **EP 1 828 339 B1**
(45) Veröffentlichungstag und Bekanntmachung des Hinweises auf die Patenterteilung: **27.10.2010**
(21) Anmeldenummer: 05818325.2
(22) Anmeldetag: 14.12.2005
(51) Int. Cl.: C09J 7/02, C09J 133/08

(54) **VERNETZBARER HAFTKLEBSTOFF FÜR WIEDERABLÖSBARE WEICH-PVC-TRÄGER**
CROSS-LINKABLE PRESSURE-SENSITIVE ADHESIVE FOR DETACHABLE SOFT PVC SUPPORTS
MATIERE ADHESIVE RETICULABLE POUR SUPPORTS EN PVC MOU POUVANT ETRE DECOLLES

(30) Priorität: 17.12.2004 DE 102004061611
(43) Veröffentlichungstag der Anmeldung: 05.09.2007
(73) Patentinhaber: BASF SE, 67056 Ludwigshafen (DE)
(72) Erfinder: SCHUMACHER, Karl-Heinz, 67433 Neustadt (DE); CHOI, Nok-young, 67063 Ludwigshafen (DE)
(86) Internationale Anmeldenummer: PCT/EP2005/013402
(87) Internationale Veröffentlichungsnummer: WO 2006/066761

(56) Entgegenhaltungen:
- EP-A- 0 127 834
- PATENT ABSTRACTS OF JAPAN Bd. 018, Nr. 616 (M-1710), 24. November 1994 (1994-11-24) & JP 06 238855 A (DAINIPPON INK & CHEM INC), 30. August 1994 (1994-08-30)

## Beschreibung

1. Die Erfindung betrifft selbstklebende Artikel aus mindestens einem Träger und einem Haftklebstoff, enthaltend
A) ein Polymer aufgebaut aus
   a) 50 bis 99,5 Gew. % Butylacrylat,
   b) 0 bis 40 Gew. % 2-Ethylhexylacrylat
   c) 0 bis 5 Gew. % einer ethylenisch ungesättigten Säure
   d) 0,1 bis 5 Gew. % einer ethylenisch ungesättigten Verbindung mit mindestens einer Keto- oder Aldeydgruppe
   e) 0 bis 30 Gew. % weiteren Monomeren
   und
B) eine Verbindung, welche mindestens zwei funktionelle Gruppen enthält, die mit den Keto- oder Aldehydgruppen eine Vernetzungsreaktion eingehen.

Für Außenanwendungen werden häufig selbstklebende Etiketten und Bänder sowie bedruckte Folien mit Weich-PVC als Trägermaterial eingesetzt. Weich-PVC-Folien enthalten niedermolekulare Weichmacher auf Phthalat Basis. Ein Problem, das durch die Verwendung dieser Weichmacher auftritt, ist, dass der Weichmacher aus der Folie in den Haftklebstoff migrieren kann. Hierdurch werden die anwendungstechnischen Klebeigenschaften beeinträchtigt.

Im Außenbereich sind die selbstklebenden Artikel auch dem Einfluss von Feuchtigkeit ausgesetzt.

Die Einwirkung von Wasser auf den Klebstofffilm kann zu einer unerwünschten weißen Trübung führen, welche Weißanlaufen genannt wird.

Selbstklebende, bedruckte Folien werden oft auch für dekorative Zwecke oder zur Werbung genutzt und dazu z. B. auf Fahrzeuge aller Art, insbesondere Personenkraftwagen, Omnibuse etc. geklebt.
Bei vielen Anwendungen ist gewünscht, dass sich die Folien später wieder rückstandsfrei ablösen lassen.

Aus EP-A 1 378 527 sind Haftklebstoffe für Träger aus Weich-PVC bekannt, welche keinen Vernetzer enthalten. WO 93/14161 beschreibt vernetzbare Haftklebstoffe für die gleiche Anwendung.

Haftklebstoffe mit C₄ Alkyl-Acrylaten und C₆ bis C₁₂ Alkyl-Acrylaten sind Gegenstand der EP-A 952 199.

Klebstoffe, welche ein Vernetzungssystem aus Keto- oder Aldehydgruppen haltigen Polymeren und Dihydraziden enthalten, sind bereits bekannt und in EP-A 148 386 und DE-A 101 35 379 (PF52675) als Kaschierklebstoff beschrieben.

Aufgabe der vorliegenden Erfindung waren rückstandsfrei wiederablösbare selbstklebende Artikel mit Weich-PVC als Trägermaterial mit guter Adhäsion, Kohäsion und geringem Weißanlaufen.

Demgemäß wurden die eingangs definierten selbstklebenden Artikel gefunden.

Die selbstklebenden Artikel weisen einen Haftklebstoff auf, der auf einen Träger beschichtet ist.

Der Haftklebstoff enthält als Bindemittel das eingangs definierte Polymer, welches durch radikalische Polymerisation der Monomere a) bis e) erhältlich ist.

Das Polymer A) besteht zu 50 bis 99,5 Gew. %, vorzugsweise 50 bis 85 Gew. % und besonders bevorzugt zu 60 bis 80 Gew. % aus n-Butylacrylat (Monomer a)).

Polymer A) besteht weiterhin zu 0 bis 40 Gew. % aus 2-Ethylhexylacrylat (Monomer b)).

Vorzugsweise ist 2-Ethylhexylacrylat zu mindestens 5 Gew. % in Polymer A) enthalten. Besonders bevorzugt beträgt der Anteil von 2-Ethylhexylacrylat 10 bis 40 Gew. % und ganz besonders bevorzugt 20 bis 35 Gew. %.

Bei der ethylenisch ungesättigten Säure c) kann es sich um eine Sulfonsäure, Phosphorsäure oder vorzugsweise Carbonsäure handeln.

In Betracht kommen z. B. Maleinsäure, Fumarsäure, Itaconsäure oder vorzugsweise Acrylsäure bzw. Methacrylsäure.

Der Gehalt an c) beträgt vorzugsweise 0 bis 3, besonders bevorzugt 0 bis 2 Gew. %. Insbesondere ist Monomer c) in einer Menge von mindestens 0,2 Gew. % vorhanden.

Monomere d) sind z. B. Acrolein, Methacrolein, Vinylalkylketone mit 1 bis 20, vorzugsweise 1 bis 10 Kohlenstoffatome im Alkylrest, Formylstyrol, (Meth-)acrylsäurealkylester mit ein oder zwei Keto- oder Aldehyd-, bzw. einer Aldehyd- und einer Ketogruppe im Alkylrest wobei der Alkylrest vorzugsweise insgesamt 3 bis 10 Kohlenstoffatome umfaßt, z. B. (Meth)acryloxyalkylpropanale, wie sie in der DE-A 2 722 097 beschrieben sind. Des weiteren eignen sich auch N-Oxoalkyl(meth)acrylamide wie sie z. B. aus der US 4,226,007, der DE-A 2 061 213 oder DE-A 2 207 209 bekannt sind.

Besonders bevorzugt sind Acetoacetyl(meth)acrylat, Acetoacetoxyethyl(meth)acrylat und insbesondere Diacetonacrylamid.

Der Gehalt an Monomeren d) im Polymer beträgt 0,1 bis 5 Gew. %, vorzugsweise 0,1 bis 2 Gew. % und besonders bevorzugt 0,2 bis 1 Gew. %.

Weitere Monomere e) sind z. B. sonstige C₁-C₈ Alkyl(meth)acrylate, insbesondere Methyl(meth)acrylat, vinylaromatische Verbindungen, insbesondere Styrol, Vinylester von Carbonsäure, z. B. Vinylacetat etc..

Der Gehalt an weiteren Monomeren e) kann 0 bis 30 Gew. %, insbesondere 0 bis 10 Gew. % bzw. 0 bis 5 Gew. % betragen.

Insbesondere kann auf weitere Monomere verzichtet werden, das sie im Rahmen der vorliegenden Erfindung nicht benötigt werden.

In einer bevorzugten Ausführungsform enthält Polymer A) und auch der Haftklebstoff keine Vinylester von Carbonsäuren, insbesondere kein Vinylacetat.

Die Herstellung des Polymeres A) erfolgt in einer bevorzugten Ausführungsform durch Emulsionspolymerisation, es handelt sich daher um ein Emulsionspolymerisat.

Bei der Emulsionspolymerisation werden ionische und/oder nicht-ionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 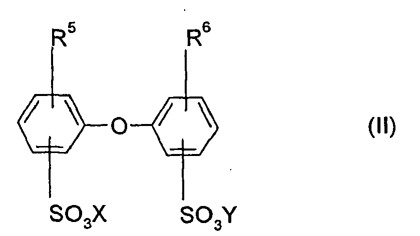 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax^{®} 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax^{®}2 A1, Emulan^{®} NP 50, Dextrol^{®} OC 50, Emulgator 825, Emulgator 825 S, Emulan^{®} OG, Texapon^{®} NSO, Nekanil^{®} 904 S, Lumiten^{®} I-RA, Lumiten^{®} E 3065, Disponil^{®} FES 77, Lutenso^{®} AT 18, Steinapol VSL, Emulphor NPS 25.

Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate.

Bevorzugte Emulgatoren sind solche mit Sulfat- oder Sulfonatgruppen. Besonders bevorzugt sind Fettalkoholethersulfate, Sulfobernsteinsäureester und ganz besonders bevorzugt Mischungen dieser beiden.

Die grenzflächenaktive Substanz wird üblicherweise in Mengen von 0,1 bis 10 Gew.-Teile, vorzugsweise 0,2 bis 5 Gew.-Teile bezogen auf 100 Gew.-Teile der zu polymerisierenden Monomeren verwendet.

Wasserlösliche Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z. B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z. B. um die bereits vorstehend genannten Initiatoren für die Emulsionspolymerisation.

Bei der Reduktionskomponenten handelt es sich z. B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z. B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew. %, bevorzugt 0,5 bis 20 Gew. %, besonders bevorzugt 1,0 bis 10 Gew. %, bezogen auf die Lösung.

Die Menge der Initiatoren beträgt im allgemeinen 0,1 bis 10 Gew. %, bevorzugt 0,5 bis 5 Gew. %, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z. B. in Mengen von 0 bis 0,8 Gew.-Teile, bezogen auf 100 Gew.-Teile der zu polymerisierenden Monomeren, durch die Molmasse verringert wird. Geeignet sind z. B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d. h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew. %, bevorzugt von 40 bis 75 Gew. % erhalten.

Für eine hohe Raum/Zeitausbeute des Reaktors sind Dispersionen mit einem möglichst hohen Feststoffgehalt bevorzugt. Um Feststoffgehalte > 60 Gew. % erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Das so hergestellte Polymer wird vorzugsweise in Form seiner wässrigen Dispersion verwendet.

Die mittlere Teilchengröße der in der wässrigen Dispersion dispergierten Polymerteilchen ist vorzugsweise kleiner 300 nm, insbesondere kleiner 200 nm. Besonders bevorzugt liegt die mittlere Teilchengröße zwischen 140 und 200 nm.

Unter mittlerer Teilchengröße wird hier der d₅₀-Wert der Teilchengrößenverteilung verstanden, d. h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mäschtle, Makromolekulare Chemie 185 (1984), Seite 1025 - 1039) bestimmt werden.

Der pH-Wert der Polymerdispersion wird vorzugsweise auf pH größer 4,5, insbesondere auf einen pH-Wert zwischen 5 und 8 eingestellt.

Die Glasübergangstemperatur des Polymeren, bzw. des Polymeren beträgt vorzugsweise -60 bis 0°C, besonders bevorzugt -60 bis -10°C und ganz besonders bevorzugt -50 bis -20°C.

Die Glasübergangstemperatur lässt sich nach üblichen Methoden wie Differentialthermoanalyse oder Differentail Scanning Calorimetrie (s. z. B. ASTM 3418/82, sog. "midpoint temperature") bestimmen.

Der Haftklebstoff enthält weiterhin die eingangs definierte Verbindung B).

Verbindung B) hat mindestens 2 funktionelle Gruppen, insbesondere 2 bis 5 funktionelle Gruppen, besonders bevorzugt 2 oder 3 funktionelle Gruppen, ganz besonders bevorzugt 2 funktionelle Gruppen, die mit den Keto- oder Aldehydgruppen eine Vernetzungsreaktion eingehen.

In Betracht kommen z. B. Hydrazid-, Hydroxylamin- oder Oximether- oder Aminogruppen als funktionelle Gruppen. Besonders bevorzugt sind Hydrazidgruppen.

Geeignete Verbindungen mit Hydrazidgruppen sind z. B. Polycarbonsäurehydrazide mit einem Molgewicht von bis zu 500 g/mol.

Besonders bevorzugte Hydrazidverbindungen sind Dicarbonsäuredihydrazide mit bevorzugt 2 bis 10 C-Atomen.

Genannt seien z. B. Oxalsäuredihydrazid, Malonsäuredihydrazid, Bernsteinsäuredihydrazid, Glutarsäuredihydrazid, Adipinsäurehydrazid, Sebazinsäuredihydrazin, Maleinsäuredihydrazid, Fumarsäuredihydrazid, Itaconsäuredihydrazid und/oder Isophthalsäuredihydrazid. Von besonderem Interesse sind: Adipinsäuredihydrazid, Sebazonsäuredihydrazid und Isophthalsäuredihydrazid.

Geeignete Verbindungen mit Hydroxylamin- oder Oximethergruppen sind z. B. in WO 93/25588 genannt.

Es handelt sich z. B. um Hydroxylaminderivate der allgemeinen Formel

(H₂N-O)-₂A I,

worin A für einen gesättigten oder ungesättigten aliphatischen, linearen oder.verzweigten Kohlenwasserstoffrest aus 2 bis 12 Kohlenstoffatomen, welche durch 1 bis 3 nicht benachbarte Sauerstoffatome unterbrochen sein kann, und n für 2, 3 oder 4 steht, oder Oximether der Formel 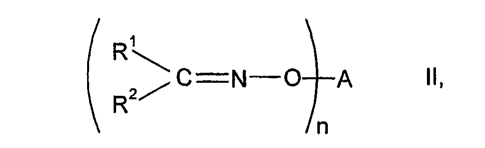 worin A und n die oben genannte Bedeutung haben und R¹ und R² unabhängig voneinander für einen C₁-C₁₀-Alkyl, einen C₁-C₁₀-Alkoxy-, einen C₅-C₁₀-Arylrest, welche auch 1 bis 3 nicht benachbarte Stickstoff-, Sauerstoff- oder Schwefelatome in der Kohlenstoffkette oder im Kohlenstoffring enthalten und durch 1 bis 3 C₁-C₄-Alkyl- oder - Alkoxygruppen substituiert sein können, stehen R¹ oder R² für ein Wasserstoffatom stehen können, oder R¹ oder R² gemeinsam eine Brücke aus 2 bis 14 Kohlenstoffatomen bilden, wobei ein Teil der Kohlenstoffatome auch Bestandteil eines aromatischen Ringsystems sein kann.

Bei der Variablen A in Formel I und II handelt es sich bevorzugt um eine Kohlenwasserstoffkette aus 2 bis 8 Kohlenstoffatomen und n ist vorzugsweise gleich 2.

Die Reste R¹ und R² stehen jeweils bevorzugt für ein Wasserstoffatom, eine C₁- bis C₆-Alkoxygruppe. Im Falle des Wasserstoffatoms kann nur einer der Reste R¹ oder R² für ein Wasserstoffatom stehen.

Als Verbindungen mit Aminogruppen geeignet sind beispielsweise Ethylendiamin, Propylendiamin, Tetramethylendiamin, Pentamethylendiamin, Hexamethylendiamid, Diethylentriamin, Triethylentetramin, Polyethylenimine, teilhydrolysierte Polyvinylformamide, Ethylenoxid und Propylenoxid Addukte wie die Texaco "Jeffamine", Cyclohexandiamin und Xylylendiamin.

Die Verbindung mit den funktionellen Gruppen kann dem Polymer A) bzw. der Dispersion des Polymeren zu jedem Zeitpunkt zugesetzt werden. In der wässrigen Dispersion tritt noch keine Vernetzung mit den Keto- oder Aldehydgruppen ein. Erst bei der Trocknung tritt Vernetzung auf dem beschichteten Substrat ein.

Die Menge der Verbindung mit dem funktionellen Gruppen wird vorzugsweise so bemessen, dass das Molverhältnis der funktionellen Gruppen zu den Keto- und/oder Aldehydgruppen des Polymeren 1 : 10 bis 10 : 1, insbesondere 1 : 5 bis 5 : 1, besonders bevorzugt 1 : 2 bis 2 : 1 und ganz besonders bevorzugt 1 : 1,3 bis 1,3 : 1 beträgt.

Der Gewichtsanteil von B) beträgt vorzugsweise 0,05 bis 2, insbesondere 0,05 bis 1, ganz besonders bevorzugt 0,1 bis 0,4 Gew.-Teile auf 100 Gew.-Teile Polymer A).

Polymer A), bzw. die wässrige Dispersion des Polymeren kann in einfacher Weise mit Verbindung B) gemischt werden. Die erhaltene Mischung ist lagerstabil.

Die Haftklebstoffe können allein aus dem Polymeren bzw. der wässrigen Dispersion des Polymeren A) und Verbindung B) bestehen.

Die Haftklebstoffe können weitere Zusatzstoffe enthalten z. B. Füllstoffe, Farbstoffe, Verlaufsmittel, Weichmacher, Verdicker oder Tackifier (klebrigmachendes Harz). Tackifier sind z. B. Naturharze, wie Kolophoniumharze und deren durch Disproportionierung oder Isomeriesierung, Polymerisation, Dimerisation, Hydrierung entstehenden Derivate. Diese können in ihrer Salzform (mit z. B. ein- oder mehrwertigen Gegenionen (Kationen)) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z. B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexandien, Styrol, a-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew. % aus C₁-C₈ Alkyl(meth)acrylaten.

Bevorzugte Tackifier sind natürliche oder chemische modifizierte Kolophoniumharze. Kolophoniumharze bestehen zum überwiegenden Teil aus Abietinsäure oder Abiettinsäurederivaten.

Die Gewichtsmenge der Tackifier beträgt vorzugsweise 5 bis 100 Gew.-Teile, besonders bevorzugt 10 bis 50 Gew.-Teile bezogen auf 100 Gew.-Teile Polymer (fest/fest).

Vorzugsweise enthält der Haftklebstoff Weichmacher.

In Betracht kommen z. B. Ester, vorzugsweise Diester von C₅ bis C₈ Dicarbonsäuren, insbesondere Adipinsäureester.
Bevorzugt sind Adipinsäureester. Geeignete Adipinsäureester sind z. B. unter dem Handelsnamen Plastomoll® DNA (Diisononyladipat) erhältich.

Die Haftklebstoffe werden zur Herstellung von selbstklebenden Artikeln, wie Etiketten, Klebebänder oder Klebefolien, z. B. Schutzfolien verwendet.

Die selbstklebenden Artikel bestehen im allgemeinen aus einem Träger und einer ein- oder beidseitig, vorzugsweise einseitig aufgebrachten Schicht des Klebstoffs.

Bei dem Trägermaterial kann es sich z. B. um Papier oder vorzugsweise um Kunststofffolien aus Polyolefinen oder PVC, besonders bevorzugt um Weich-PVC handeln.

Unter Weich-PVC versteht man Polyvinylchlorid, welches einen Gehalt an Weichmachern hat und eine erniedrigte Erweichungstemperatur aufweist. Übliche Weichmacher sind z. B. Phthalate, Epoxide, Adipinsäureester. Der Gehalt der Weichmacher im Weich-PVC beträgt i. a. mehr als 10, insbesondere mehr als 20 Gew. %.

Bei Weich PVC können Weichmacher in die Klebstoffschicht migrieren und die Klebstoffeigenschaften deutlich verschlechtern. Mit dem erfindungsgemäßen Klebstoff wirkt sich eine Migration der Weichmacher nicht oder kaum auf die Eigenschaften des Klebstoffs aus.

Zur Herstellung der Klebstoffschicht auf dem Trägermaterial kann das Trägermaterial in üblicher Weise beschichtet werden. Übliche Auftragsmengen sind z. B. 5 bis 40 g/m² (fest, ohne Wasser).

Die enthaltenen, beschichteten Substrate werden z. B. als Selbstklebeartikel, wie Etiketten, Klebebänder oder Folien, z. B. Schutzfolien und insbesondere bedruckte Folien für dekorative Zwecke verwendet. Die Artikel eignen sich auch für Außenanwendungen z. B. auf Fahrzeugen aller Art.

Die erfindungsgemäßen selbstklebenden Artikel haben gute anwendungstechnische Eigenschaften.

Insbesondere sind sie nach dem Verkleben auf den unterschiedlichsten Substraten rückstandsfrei wieder ablösbar, dies gilt auch bei tiefen Temperaturen unter +5°C bzw. unter 0°C. Sie haben dazu eine verringerte Haftung aber eine gute Kohäsion.

Die Eigenschaften bleiben auch bei Weich-PVC als Trägermaterial gut.

Eine Trübung der Klebstoffschicht durch Einwirkung von Feuchtigkeit (Weißanlaufen) ist nicht oder kaum zu beobachten. Die Klebstoffschicht hat daher eine hohe Wasserbeständigkeit.

### Beispiele

### A) Einsatzstoffe

### Polymer 1:

Emulsionspolymerisat aus
69 Gew.-Teilen n-Butylacrylat (BA)
30 Gew.-Teilen 2-Ethylhexylacrylat (EHA)
1 Gew.-Teil Acrylsäure (AS)
0,4 Gew.-Teilen Diacetonacrylamid (DAAM)
Emulgator: 1 Gew.-Teil Disponil® FES77 (Fettalkoholether-sulfat) 0,5 Gew.-Teile Lumiten® I-SC (Sulfobernsteinsäureester)

Polymer 2 (zum Vergleich):
62 Gew.-Teile BA
28 Gew.-Teile EHA
5 Gew.-Teile Methylacrylat (MA)
3 Gew.-Teile Methylmethacrylat (MMA)
2 Gew.-Teile AS
0,4 Gew.-Teile Butandiol-diacrylat (BDA, Vernetzer)

### Verbindung B)

### Adipinsäuredihydrazit (ADDH) vernetzt mit DAAM

### Weichmacher

### Plastomoll® DNA (Adipinsäureester)

### B) Herstellung der Haftklebstoffe

Zu den wässrigen Dispersionen der Polymere 1 und 2 wurden die weiteren Bestandteile zugegeben (siehe Tabelle).

### C) Anwendungstechnische Prüfungen

Die Haftklebstoffe wurden mit einer Auftragsmenge von 25 g/m² (trocken, ohne Wasser) auf Weich-PVC-Folie (Firma Renolit) beschichtet und 3 Minuten bei 90°C getrocknet.

Anschließend wurde die Schälfestigkeit (Adhäsion) bestimmt.

Bei der Bestimmung der Schälfestigkeit (Adhäsion) wurde jeweils ein 2,5 cm breiter Prüfstreifen auf einen Prüfkörper aus Glas geklebt und mit 1 kg schweren Rolle 1 mal angerollt. Er wurde nach 20 Minuten mit einem Ende in die oberen Backen einer Zug-Dehnungs-Prüfapparatur eingespannt. Der Klebestreifen wurde mit 300 mm/min. unter einem 180° Winkel von der Prüffläche abgezogen, d. h. der Klebestreifen wurde umgebogen und parallel zum Prüfblech abgezogen und der dazu benötigte Kraftaufwand gemessen. Das Maß für die Schälfestigkeit war die Kraft in N/2,5 cm, die sich als Durchschnittswert aus fünf Messungen ergab. Die Prüfung erfolgte ebenfalls im Normklima.

Die Prüfungen der Schälfestigkeit wurden auch nach einer Wärmelagerung durchgeführt. Die Wärmelagerung der Prüfverbunde (3 Tage, 70°C) soll ein beschleunigtes Altern der Proben simulieren und somit eine forcierte Migration des Weichmachers aus PVC-Träger in die Klebeschicht bewirken.

### Wasserbeständigkeit (Weißanlaufen)

Die Prüfstreifen wurden in ein Wasserbad gehängt. Die Trübung des Klebstofffilms wurde über die Zeit beobachtet. Es wurde der Zeitpunkt bestimmt, an dem eine deutliche Trübung erkennbar wurde. Je länger der Zeitraum, um so besser ist die Wasserbeständigkeit.

### Abzugsverhalten auf Glas?

Die beschichtete PVC-Folie wurde bei 0°C auf eine Glasplatte geklebt und von Hand wieder abgezogen. Das Abzugsverhalten wurde beurteilt.

**Tabelle - Prüfergebnisse**

| Haftklebstoff (Gew.-Teile) | Weißanlaufen nach | Abzug 0°C von Glas | Schälfestigkeit auf Glas nach 24 h Lagerung der Verklebung bei RT (N/25 mm) | Schälfestigkeit nach 3 Tagen Lagerung des Laminats bei 70°C, dann Verklebung auf Glas und 24 h Lagerung der Verklebung bei RT (N/25 mm) | Rückstände nach dem Verkleben und Ablösen von Glas, lackiertem Blech oder Polycarbonat |
|---|---|---|---|---|---|
| 100 Polymer 1 (fest) 0,2 ADDH | 30 min. | Weich | 5 N | 2 N | Nein |
| 100 Polymer 1 (fest) 0,2 ADDH 3 Plastomoll | 30 min. | Sehr weich | 3 N | 1 N | Nein |
| 100 Polymer 2 (fest) | 30 min. | Weich | 5 N | 0,5 N | Ja |

## Patentansprüche

1. Selbstklebende Artikel aus mindestens einem Weich-PVC-Träger und einem Haftklebstoff, enthaltend
A) ein Polymer aufgebaut aus
a) 50 bis 99,5 Gew. % Butylacrylat,
b) 0 bis 40 Gew. % 2-Ethylhexylacrylat
c) 0 bis 5 Gew. % einer ethylenisch ungesättigten Säure
d) 0,1 bis 5 Gew. % einer ethylenisch ungesättigten Verbindung mit mindestens einer Keto- oder Aldeydgruppe
e) 0 bis 30 Gew. % weiteren Monomeren
und
B) eine Verbindung, welche mindestens zwei funktionelle Gruppen enthält, die mit den Keto- oder Aldehydgruppen eine Vernetzungsreaktion eingehen.

2. Selbstklebende Artikel gemäß Anspruch 1, **dadurch gekennzeichnet, dass** das Polymer A) aufgebaut ist aus
a) 50 bis 85 Gew. % Butylacrylat,
b) 10 bis 40 Gew. % 2-Ethylhexylacrylat
c) 0 bis 5 Gew. % einer ethylenisch ungesättigten Säure
d) 0,1 bis 2 Gew. % einer ethylenisch ungesättigten Verbindung mit mindestens einer Keto- oder Aldeydgruppe
e) 0 bis 10 Gew. % weiteren Monomeren

3. Selbstklebende Artikel gemäß Anspruch 1 oder 2, **dadurch gekennzeichnet, dass** es sich bei Polymer A) um ein Emulsionspolymerisat handelt.

4. Selbstklebende Artikel gemäß einem der Ansprüche 1 bis 3, **dadurch gekennzeichnet, dass** es sich bei den funktionellen Gruppen der Verbindung B) um Hydrazid-, Hydroxylamin-, Oximether-, oder Aminogruppen handelt.

5. Selbstklebende Artikel gemäß einem der Ansprüche 1 bis 4, **dadurch gekennzeichnet, dass** es sich bei Verbindung B) um Dicarbonsäuredihydrazide handelt.

6. Selbstklebende Artikel gemäß einem der Ansprüche 1 bis 5, **dadurch gekennzeichnet, dass** es sich bei den selbstklebenden Artikeln um selbstklebende Folien handelt.

7. Verwendung von einem Haftklebestoff, enthaltend
A) ein Polymer aufgebaut aus
a) 50 bis 99,5 Gew. % Butylacrylat,
b) 0 bis 40 Gew. % 2-Ethylhexylacrylat
c) 0 bis 5 Gew. % einer ethylenisch ungesättigten Säure
d) 0,1 bis 5 Gew. % einer ethylenisch ungesättigten Verbindung mit mindestens einer Keto- oder Aldeydgruppe
e) 0 bis 30 Gew. % weiteren Monomeren
und
B) eine Verbindung, welche mindestens zwei funktionelle Gruppen enthält, die mit den Keto- oder Aldehydgruppen eine Vernetzungsreaktion eingehen,
zur Herstellung von selbstklebenden Artikeln, wobei diese selbstklebenden Artikel mindestens einen Weich- PVC Träger aufweisen, und wobei diese selbstklebenden Artikel rückstandsfrei wiederablösbar sind.

8. Verfahren zur Herstellung von selbstklebenden Artikeln, **dadurch gekennzeichnet, dass** ein Weich-PVC-Träger mit einem Haftklebstoff enthaltend
A) ein Polymer aufgebaut aus
a) 50 bis 99,5 Gew. % Butylacrylat,
b) 0 bis 40 Gew. % 2-Ethylhexylacrylat
c) 0 bis 5 Gew. % einer ethylenisch ungesättigten Säure
d) 0,1 bis 5 Gew. % einer ethylenisch ungesättigten Verbindung mit mindestens einer Keto- oder Aldeydgruppe
e) 0 bis 30 Gew. % weiteren Monomeren
und
B) eine Verbindung, welche mindestens zwei funktionelle Gruppen enthält, die mit den Keto- oder Aldehydgruppen eine Vernetzungsreaktion eingehen,
beschichtet wird.

## Claims

1. A self-adhesive article comprising at least one plasticized PVC backing and a pressure sensitive adhesive comprising
A) a polymer synthesized from
a) 50 to 99.5% by weight of butyl acrylate
b) 0 to 40% by weight of 2-ethylhexyl acrylate
c) 0 to 5% by weight of an ethylenically unsaturated acid
d) 0.1 to 5% by weight of an ethylenically unsaturated compound having at least one keto or aldehyde group
e) 0 to 30% by weight of further monomers
and
B) a compound which comprises at least two functional groups which with the keto or aldehyde groups enter into a crosslinking reaction.

2. The self-adhesive article according to claim 1, wherein the polymer A) is synthesized from
a) 50 to 85% by weight of butyl acrylate
b) 10 to 40% by weight of 2-ethylhexyl acrylate
c) 0 to 5% by weight of an ethylenically unsaturated acid
d) 0.1 to 2% by weight of an ethylenically unsaturated compound having at least one keto or aldehyde group
e) 0 to 10% by weight of further monomers.

3. The self-adhesive article according to claim 1 or 2, wherein polymer A) is an emulsion polymer.

4. The self-adhesive article according to any one of claims 1 to 3, wherein the functional groups of compound B) are hydrazide, hydroxylamine, oxime ether, or amino groups.

5. The self-adhesive article according to any one of claims 1 to 4, wherein compound B) comprises dicarboxylic dihydrazides.

6. The self-adhesive article according to any one of claims 1 to 5, which is a self-adhesive sheet.

7. The use of a pressure sensitive adhesive comprising
A) a polymer synthesized from
a) 50 to 99.5% by weight of butyl acrylate
b) 0 to 40% by weight of 2-ethylhexyl acrylate
c) 0 to 5% by weight of an ethylenically unsaturated acid
d) 0.1 to 5% by weight of an ethylenically unsaturated compound having at least one keto or aldehyde group
e) 0 to 30% by weight of further monomers
B) a compound which comprises at least two functional groups which with the keto or aldehyde groups enter into a crosslinking reaction,
for producing self-adhesive articles, wherein these self-adhesive articles have at least one plasticized PVC backing and wherein these self-adhesive articles are redetachable without residue.
and

8. A method for producing self-adhesive articles, wherein a plasticized PVC backing is coated with a pressure sensitive adhesive comprising
A) a polymer synthesized from
a) 50 to 99.5% by weight of butyl acrylate
b) 0 to 40% by weight of 2-ethylhexyl acrylate
c) 0 to 5% by weight of an ethylenically unsaturated acid
d) 0.1 to 5% by weight of an ethylenically unsaturated compound having at least one keto or aldehyde group
e) 0 to 30% by weight of further monomers
and
B) a compound which comprises at least two functional groups which with the keto or aldehyde groups enter into a crosslinking reaction.

## Revendications

1. Articles autoadhésifs à base d'au moins un support en PVC souple et d'un autoadhésif, contenant
A) un polymère constitué de
a) 50 à 99,5 % en poids d'acrylate de butyle,
b) 0 à 40 % en poids d'acrylate de 2-éthylhexyle,
c) 0 à 5 % en poids d'un acide à insaturation éthylénique
d) 0,1 à 5 % en poids d'un composé à insaturation éthylénique, comportant au moins un groupe céto ou aldéhyde
e) 0 à 30 % en poids d'autres monomères
et
B) un composé qui contient au moins deux groupes fonctionnels qui entrent en une réaction de réticulation avec les groupes céto ou aldéhyde.

2. Articles autoadhésifs selon la revendication 1, **caractérisés en ce que** le polymère A) est constitué de
a) 50 à 85 % en poids d'acrylate de butyle,
b) 10 à 40 % en poids d'acrylate de 2-éthylhexyle,
c) 0 à 5 % en poids d'un acide à insaturation éthylénique
d) 0,1 à 2 % en poids d'un composé à insaturation éthylénique, comportant au moins un groupe céto ou aldéhyde
e) 0 à 10 % en poids d'autres monomères.

3. Articles autoadhésifs selon la revendication 1 ou 2, **caractérisés en ce que** le polymère A) consiste en un produit de polymérisation en émulsion.

4. Articles autoadhésifs selon l'une quelconque des revendications 1 à 3, **caractérisés en ce que** les groupes fonctionnels du composé B) consistent en des groupes hydrazide, hydroxylamine, oxime-éther ou amino.

5. Articles autoadhésifs selon l'une quelconque des revendications 1 à 4, **caractérisés en ce que** le composé B) consiste en dihydrazide d'acide dicarboxylique.

6. Articles autoadhésifs selon l'une quelconque des revendications 1 à 5, **caractérisés en ce que** les articles autoadhésifs consistent en des films autoadhésifs.

7. Utilisation d'un autoadhésif, contenant
A) un polymère constitué de
a) 50 à 99,5 % en poids d'acrylate de butyle,
b) 0 à 40 % en poids d'acrylate de 2-éthylhexyle,
c) 0 à 5 % en poids d'un acide à insaturation éthylénique
d) 0,1 à 5 % en poids d'un composé à insaturation éthylénique, comportant au moins un groupe céto ou aldéhyde
e) 0 à 30 % en poids d'autres monomères
et
B) un composé qui contient au moins deux groupes fonctionnels qui entrent en une réaction de réticulation avec les groupes céto ou aldéhyde,
pour la fabrication d'articles autoadhésifs, ces articles autoadhésifs comportant au moins un support en PVC souple, et ces articles autoadhésifs étant redétachables sans laisser de résidu.

8. Procédé pour la fabrication d'articles autoadhésifs, **caractérisé en ce qu'**on enduit un support en PVC souple avec un autoadhésif contenant
A) un polymère constitué de
a) 50 à 99,5 % en poids d'acrylate de butyle,
b) 0 à 40 % en poids d'acrylate de 2-éthylhexyle,
c) 0 à 5 % en poids d'un acide à insaturation éthylénique
d) 0,1 à 5 % en poids d'un composé à insaturation éthylénique, comportant au moins un groupe céto ou aldéhyde
e) 0 à 30 % en poids d'autres monomères
et
B) un composé qui contient au moins deux groupes fonctionnels qui entrent en une réaction de réticulation avec les groupes céto ou aldéhyde.
